# FASCICULE DE BREVET EUROPEEN

(11) **EP 1 060 986 B1**
(45) Date de publication et mention de la délivrance du brevet: **19.11.2003**
(21) Numéro de dépôt: 00401655.6
(22) Date de dépôt: 13.06.2000
(51) Int. Cl.: B64C 25/10

(54) **Avion comportant un train d'atterrissage à détachement contrôlé en cas d'accident**
Flugzeugfahrwerk mit kontrollierter Abtrennung im Falle eines Unfalls
Airplane landing gear with controlled separation in case of an accident

(30) Priorité: 15.06.1999 FR 9907544
(43) Date de publication de la demande: 20.12.2000
(73) Titulaire: AIRBUS France, 31060 Toulouse (FR)
(72) Inventeur: Dazet, Francis, 31140 Saint-Alban (FR); Maurin, André, 31300 Toulouse (FR)
(74) Mandataire: Poulin, Gérard

(56) Documents cités:
- US-A- 4 155 522

## Description

### Domaine technique

L'invention concerne un avion équipé d'un train d'atterrissage conçu pour pouvoir se détacher de façon contrôlée, en cas d'accident. L'invention permet notamment d'éviter que le train d'atterrissage arraché ne vienne heurter un réservoir de carburant placé derrière lui.

L'invention s'applique notamment à un avion de type commercial, tel qu'un avion destiné au transport de passagers et/ou de fret.

### Etat de la technique

Dans les avions commerciaux, les réservoirs de carburant se situent habituellement dans la voilure ainsi que dans la partie basse du tronçon de fuselage qui tient la voilure, devant le train d'atterrissage principal. Cette position centrale et symétrique des réservoirs par rapport au plan longitudinal médian de l'avion permet de gérer facilement le centrage de celui-ci. En d'autres termes, la position du centre de gravité de l'avion est peu modifiée par la diminution de la masse du carburant qui se produit au fur et à mesure que celui-ci est brûlé dans les moteurs.

Lorsqu'on désire augmenter la capacité et le rayon d'action d'un avion, on peut être amené à modifier celui-ci et à en concevoir une nouvelle version, sans toutefois modifier ses caractéristiques essentielles. En effet, cela permet d'utiliser en commun sur les différentes versions d'un même avion un nombre de pièces aussi élevé que possible.

Par conséquent, une nouvelle version d'un avion existant, caractérisée par une capacité et un rayon d'action accrus par rapport à la version de base, peut être définie sans que la voilure et le tronçon qui la maintient ne soient modifiés. Dans ces conditions, les réservoirs de carburant contenus dans la voilure et dans ce tronçon ne sont pas non plus modifiés, de sorte que leur capacité reste inchangée. Afin de permettre à l'avion de mener à bien sa nouvelle mission, qui implique de disposer d'une quantité supplémentaire de carburant afin d'accroître son rayon d'action, un réservoir de carburant supplémentaire doit alors être rajouté. Un emplacement privilégié pour implanter ce réservoir supplémentaire se situe dans la partie basse du fuselage, derrière le train d'atterrissage principal. En effet, cet emplacement situé dans une partie centrale de l'avion permet une bonne gestion de la position longitudinale de son centre de gravité.

Cette position du réservoir de carburant supplémentaire peut toutefois se révéler critique dans des conditions d'atterrissage ou de décollage anormales.

Les règlements applicables prescrivent de considérer la défaillance des trains d'atterrissage et ses conséquences dans ces conditions anormales. Ils imposent aussi de limiter les fuites de carburant. Dans ces conditions, on est conduit à éviter tout choc entre le train d'atterrissage rompu et les parois du réservoir de carburant, qui pourrait mener à la perforation de ce dernier ; cela conduit à contrôler la rupture du train d'atterrissage et la trajectoire des parties de celui-ci qui sont détachées.

Sur les avions, un risque comparable existe à proximité des réacteurs. En effet, derrière la chambre de combustion de chacun des réacteurs se trouve une turbine dont les aubes sont portées à de très hautes températures. En cas de rupture d'une aube, il est donc impératif que celle-ci ne rencontre jamais sur sa trajectoire des éléments vitaux à la conduite de l'avion, tels que des commandes de vols, des circuits hydrauliques, etc., ni du carburant. En ce qui concerne le carburant, la solution actuellement utilisée consiste à limiter à une valeur aussi faible que possible la quantité de combustible présente dans le cône d'éjection probable d'une aube.

Toutefois, cette solution n'est pas transposable dans le cas d'un réservoir de carburant placé derrière le train d'atterrissage principal de l'avion. En effet, pour les raisons énoncées précédemment, cette position présente des avantages essentiels qui imposent de la retenir, lorsqu'un réservoir supplémentaire doit être implanté sur l'avion.

Un avion avec un train d'atterrissage avec toutes les caractéristiques du préambule de la revendication indépendante est connu de US-A-4,155,522.

### Exposé de l'invention

L'invention a pour objet un avion équipé d'un train d'atterrissage dont la conception originale lui permet de contrôler son détachement, afin notamment de supprimer tout risque de choc entre une partie détachée du train d'atterrissage et la structure de l'avion, dans des conditions d'atterrissage ou de décollage anormales.

Conformément à l'invention, ce résultat est obtenu au moyen d'un avion, comprenant une structure et au moins un train d'atterrissage implanté sous la structure, le train d'atterrissage comportant un châssis, un boggie, un amortisseur doté d'une butée de fin de course détendue et un système d'embiellage placé derrière l'amortisseur, l'amortisseur et le système d'embiellage reliant séparément le boggie au châssis, caractérisé en ce que la structure comporte une glissière contre laquelle peut venir en appui le système d'embiellage, lors d'un basculement accidentel du train d'atterrissage vers l'arrière, pour provoquer successivement une détente complète de l'amortisseur, une rupture de la butée de fin de course détendue et une rupture du système d'embiellage.

Ainsi, dans l'hypothèse d'un incident se traduisant par un basculement du train d'atterrissage vers l'arrière, la butée de fin de course détendue de l'amortisseur et le système d'embiellage qui relient tous deux le boggie au châssis se rompent automatiquement. Les deux parties de l'amortisseur liées respectivement au boggie et au châssis se séparent ensuite l'une de l'autre sous l'effet combiné du déplacement de l'avion et de la pression résiduelle régnant dans l'amortisseur, en appliquant au fuselage un niveau d'effort raisonnable. Par conséquent, le boggie est arraché automatiquement sans aucun risque de choc. Dans le cas ou un réservoir de carburant est placé dans la structure de l'avion, au-dessus de la glissière, une destruction complète de l'avion due à une explosion du carburant fuyant du réservoir est ainsi empêchée.

De préférence, le système d'embiellage comprend deux bras reliés bout à bout par une articulation apte à venir en appui contre la glissière lors d'un basculement accidentel du train d'atterrissage vers l'arrière.

Dans un mode de réalisation préféré de l'invention, l'articulation comprend alors une butée de commande de rupture, apte à commander la rupture d'une pièce du système d'embiellage lorsqu'un angle formé entre les deux bras atteint une valeur maximale prédéterminée.

Selon le cas, la pièce apte à se rompre peut alors être soit l'un des bras du système d'embiellage, dont une zone est dimensionnée de façon à pouvoir se rompre par flexion, soit l'axe de l'articulation, dimensionné de façon à pouvoir se rompre par cisaillement.

Avantageusement, l'un des bras du système d'embiellage, articulé sur le boggie, comporte un butoir apte à venir en appui contre l'amortisseur, après la rupture du système d'embiellage.

Par ailleurs, la glissière est formée, de préférence, sur un élément de structure renforcé.

Dans un mode de réalisation préféré de l'invention, la glissière comprend une première partie, apte à commander successivement la rupture de la butée de fin de course détendue de l'amortisseur et la rupture du système d'embiellage, et une deuxième partie, apte à guider une partie détachée du train d'atterrissage à l'écart dudit élément de structure de l'avion.

### Brève description des dessins

On décrira à présent, à titre d'exemples non limitatifs, deux modes de réalisation préférés de l'invention, en se référant aux dessins annexés, dans lesquels:
- la figure 1 est une vue de côté qui représente schématiquement un avion conforme à l'invention ;
- la figure 2 est une vue en perspective qui représente un train d'atterrissage principal de l'avion de la figure 1, observé de l'arrière, réalisé conformément à un premier mode de réalisation de l'invention ;
- la figure 3 est une vue en coupe transversale, à plus grande échelle, de l'articulation du système d'embiellage du train d'atterrissage illustré sur la figure 2 ;
- les figures 4A à 4C sont des vues de côté qui représentent schématiquement le train d'atterrissage de la figure 2 et les parties attenantes de l'avion dans trois états successifs du train, lors de son basculement accidentel vers l'arrière ; et
- les figures 5A à 5C sont des vues comparables aux figures 4A à 4C, illustrant un autre mode de réalisation de l'invention.

### Description détaillée de deux modes de réalisation préférés de l'invention

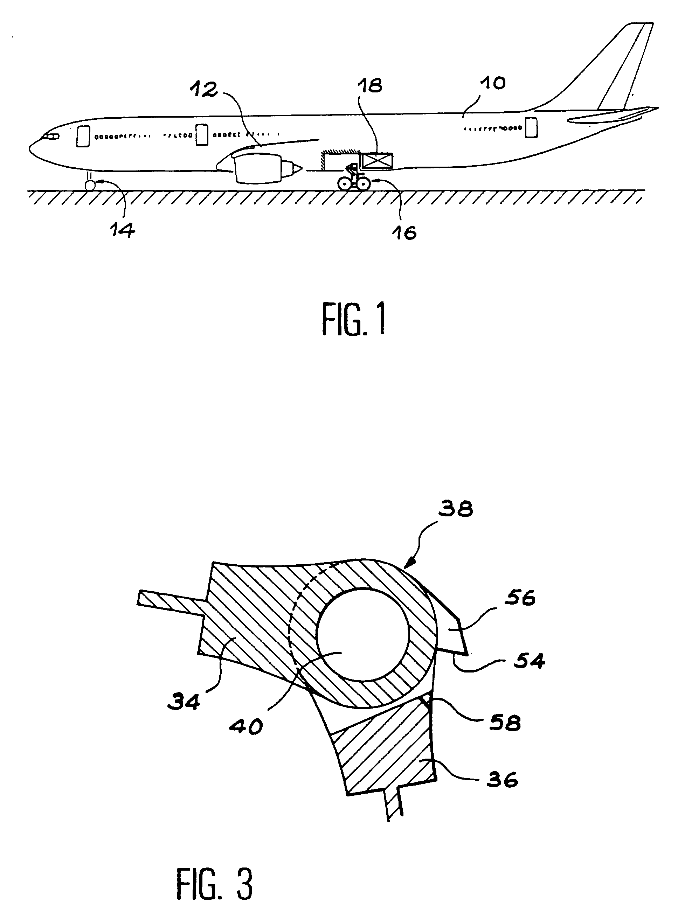

La figure 1 représente schématiquement un avion conforme à l'invention. Cet avion est un avion commercial, de conception générale classique, destiné au transport de passagers et/ou de fret. Seules les caractéristiques nécessaires à une bonne compréhension de l'invention seront décrites ci-après.

La structure de l'avion comprend notamment, de façon habituelle, un fuselage 10 ainsi qu'une voilure 12. Lorsque l'avion n'est pas en vol, cette structure repose sur le sol par un train d'atterrissage avant 14 et par un train d'atterrissage principal. Ce dernier comprend un élément de train auxiliaire 16 implanté sous le fuselage 10, qui s'ajoute aux éléments de train implantés sous la voilure 12. Pour simplifier, l'expression "train d'atterrissage" est utilisée dans l'ensemble du texte pour désigner chaque élément de train.

De manière également habituelle, l'avion est équipé de réservoirs de carburant (non représentés) implantés dans la voilure 12 ainsi que dans la partie basse du tronçon de fuselage 10 supportant celle-ci. Ce tronçon est placé à l'avant du train d'atterrissage 16 implanté sous le fuselage.

Dans le mode de réalisation représenté, un réservoir supplémentaire 18 est également implanté dans la partie basse du fuselage 10, dans un tronçon de celui-ci situé immédiatement derrière le train d'atterrissage 16. L'agencement selon l'invention est particulièrement avantageux en présence d'un tel réservoir supplémentaire. Elle peut toutefois être utilisée également lorsqu'un tel réservoir n'est pas présent sur l'avion.

Pour des raisons accidentelles telles que la présence d'un obstacle sur la piste lors du roulage de l'avion, un basculement du train d'atterrissage 16 vers l'arrière ne peut pas être totalement exclu. Conformément à l'invention, le train d'atterrissage 16 est conçu et réalisé afin que la survenance d'un tel accident ne risque pas d'engendrer un choc, et la perforation du réservoir 18 lorsqu'un tel réservoir existe.

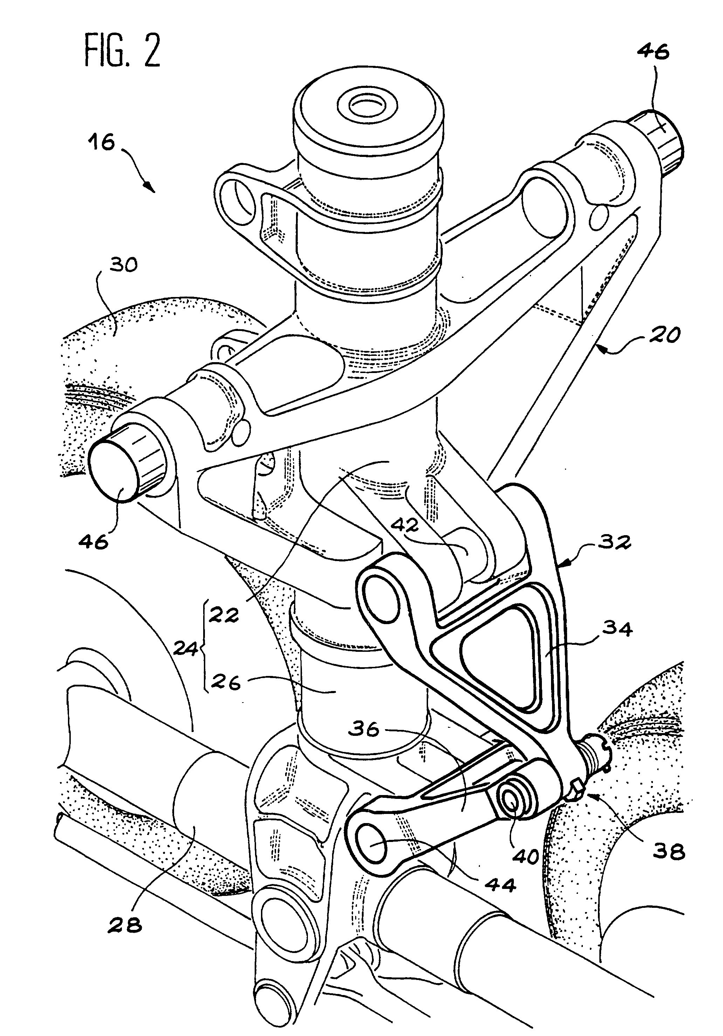

Un premier mode de réalisation préféré de l'invention permettant d'atteindre ce résultat va à présent être décrit en se référant aux figures 2, 3 et 4A à 4C. La description est faite dans l'état sorti du train.

Comme l'illustre la figure 2, le train d'atterrissage 16 comporte un châssis 20, réalisé d'un seul tenant avec un fût vertical 22 formant le cylindre supérieur fixe d'un amortisseur principal 24. Un tube 26, formant la partie basse mobile de l'amortisseur 24, porte à son extrémité inférieure un boggie 28. Chacune des extrémités avant et arrière du boggie 28 supporte à son tour la fusée d'une paire de roues 30 montées en diabolo, et dans lesquelles sont logés des freins (non représentés).

Un système d'embiellage 32, généralement appelé "compas" est interposé entre le fût 22 et le tube 26 de l'amortisseur 24. Ce système d'embiellage 32 est placé derrière l'amortisseur 24 dans le sens du déplacement de l'avion. Il comprend un premier bras 34 et un deuxième bras 36, reliés bout à bout par une articulation 38 dont l'axe 40 est orienté transversalement par rapport à l'avion, c'est-à-dire parallèlement aux axes des roues 30.

L'extrémité haute du premier bras 34, opposée à l'articulation 38, est montée pivotante sur le fût 22 par un axe 42. De façon comparable, l'extrémité basse du deuxième bras 36, opposée à l'articulation 38, est montée pivotante sur le tube 26 par un axe 44. Les axes 42 et 44 sont orientés transversalement et parallèles à l'axe 40.

Le mécanisme assurant la commande de sortie et de rentrée du train d'atterrissage 16 a été volontairement omis sur la figure 2, afin d'en faciliter la lecture.

Le châssis 20 du train d'atterrissage 16 est relié à la structure de l'avion, et plus précisément dans ce cas au fuselage 10, par deux axes alignés 46 qui font saillie de part et d'autre du châssis 20, de façon à être reçus dans des logements cylindriques complémentaires (non représentés) prévus à cet effet dans la structure du fuselage 10. Les axes 46 sont orientés transversalement, c'est-à-dire parallèlement aux axes 40, 42 et 44.

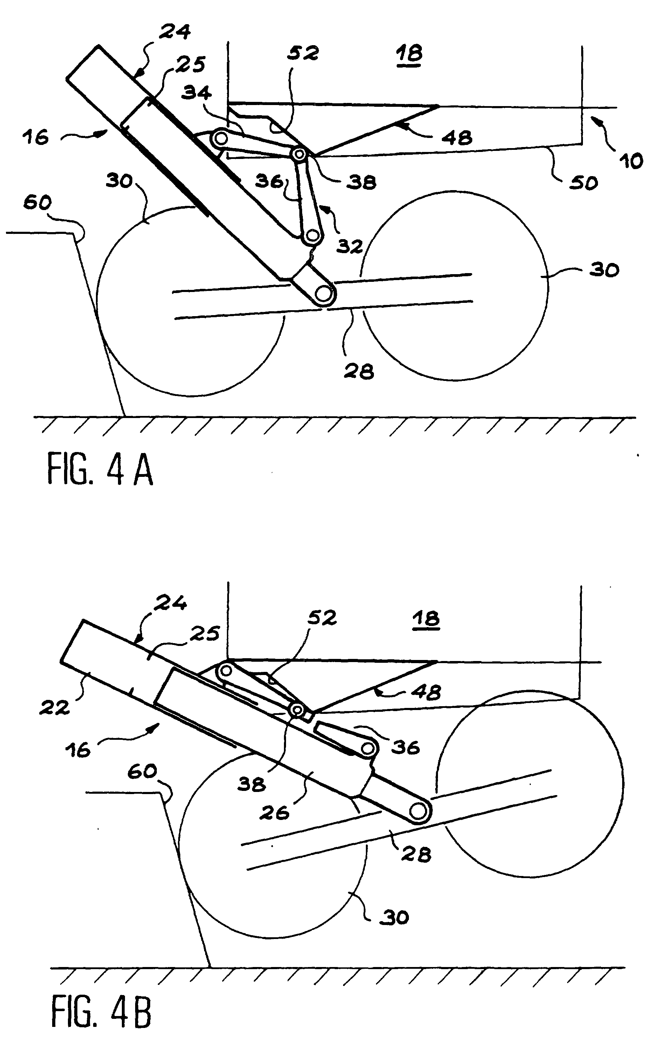

Comme le montrent plus précisément les figures 4A à 4C, le fuselage 10 de l'avion comporte, sous la partie avant du réservoir de carburant 18, un élément de structure renforcé 48. Cet élément 48 est placé à l'intérieur de l'enveloppe extérieure 50 du fuselage 10, en un emplacement tel que l'articulation 38 du système d'embiellage 32 vient automatiquement le heurter, lors d'un basculement accidentel vers l'arrière du train d'atterrissage 16. Plus précisément, l'articulation 38 vient heurter une glissière 52, tournée vers le bas prévue sur l'élément de structure 48. L'articulation 38 coulisse contre la glissière 52, inclinée dans ce cas vers l'arrière et vers le bas, lors d'un basculement accidentel du train vers l'arrière, comme l'illustrent schématiquement les figures 4A à 4C. En variante, la glissière 52 peut aussi être inclinée vers le haut, ou horizontale.

Conformément à l'invention, le système d'embiellage 32 est conçu de façon à se rompre automatiquement lorsque l'angle formé entre les deux bras 34, 36 atteint une valeur maximale prédéterminée. Cette valeur ne peut être atteinte que lorsque l'amortisseur 24 est complètement détendu et lorsqu'une butée de fin de course détendue 25 de l'amortisseur est déjà rompue. Ces ruptures successives font suite à la venue en appui de l'articulation 38 du système d'embiellage 32 contre la glissière 52, lors d'un basculement accidentel du train d'atterrissage 16 vers l'arrière.

Comme l'illustre plus précisément la figure 3, la rupture d'une pièce du système d'embiellage 32, au-delà de la valeur maximale prédéterminée de l'angle formé entre les bras 34 et 36, est commandée par une butée 54 de commande de rupture, formée sur un ergot 56 solidaire de l'extrémité du premier bras 34 liée au deuxième bras 36 par l'articulation 38. La butée 54 est placée dans le prolongement du premier bras 34 et tournée vers une surface 58 en vis-à-vis du deuxième bras 36.

Dans les conditions d'allongement normales de l'amortisseur 24, les bras 34 et 36 forment entre eux un angle tel que la butée 54 reste éloignée de la surface 58 formée sur le deuxième bras 36. Par conséquent, la butée 54 ne remplit aucune fonction lors d'un atterrissage normal, même brutal, de l'avion.

Lorsque le train d'atterrissage 16 pivote vers l'arrière, sous l'effet de circonstances accidentelles, jusqu'à la venue en appui de l'articulation 38 du système d'embiellage 32 contre la glissière 52, l'angle formé entre les bras 34 et 36 augmente progressivement. L'amortisseur 24 se détend alors complètement et sa butée 25 de fin de course détendue se rompt.

Si le pivotement du train d'atterrissage 16 se poursuit jusqu'à ce que la butée 54 vienne en appui contre la surface 58 formée sur le deuxième bras 36, tout pivotement supplémentaire du train d'atterrissage 16 (correspondant à un allongement supplémentaire de l'amortisseur 24) engendre dans le système d'embiellage 32 des contraintes propres à assurer sa rupture.

Plus précisément, l'endroit du système d'embiellage 32 au niveau duquel se produit alors la rupture est, de préférence, déterminé à l'avance, en dimensionnant l'une des pièces de ce système d'embiellage afin qu'elle se rompe automatiquement lorsqu'un effort excessif lui est appliqué.

Dans le premier mode de réalisation de l'invention, la pièce appelée à se rompre est le bras 36. Celui-ci comporte alors une zone dimensionnée de façon à pouvoir se rompre par flexion, à proximité de l'articulation 38. En variante, la rupture peut aussi se produire dans le bras 34.

On décrira à présent, en se référant en particulier aux figures 4A à 4C, les conséquences d'un roulement accidentel d'un avion ainsi réalisé, lorsque ce roulement engendre un basculement vers l'arrière du train d'atterrissage 16 dans des conditions susceptibles de mettre en péril l'intégrité du réservoir de carburant 18, lorsqu'un tel réservoir est prévu.

En raison, par exemple, d'un obstacle 60 placé sur le chemin des roues 30 du train d'atterrissage 16, celui-ci bascule vers l'arrière autour de l'axe de pivotement matérialisé par les axes 46 (figure 2). Lorsque ce basculement a pour effet d'amener l'articulation 38 du système d'embiellage 32 en appui contre la glissière 52 comme l'illustre la figure 4A, l'articulation 38 glisse contre celle-ci. Cela a pour conséquences une détente complète de l'amortisseur 24, suivie d'une rupture de la butée 25 de fin de course détendue de l'amortisseur 24. Le basculement du train a aussi pour conséquence une ouverture progressive de l'angle formé entre les bras 34 et 36.

La butée 54 vient ensuite en appui contre la surface 58 du bras 36, de sorte que la poursuite du basculement du train 16 se traduit par la rupture par flexion du bras 36, à proximité de l'articulation 38. Lorsque les deux bras sont dans le prolongement l'un de l'autre comme l'illustre la figure 4B, ils ne sont donc plus liés l'un à l'autre et le tube 26 est séparé du fût 22.

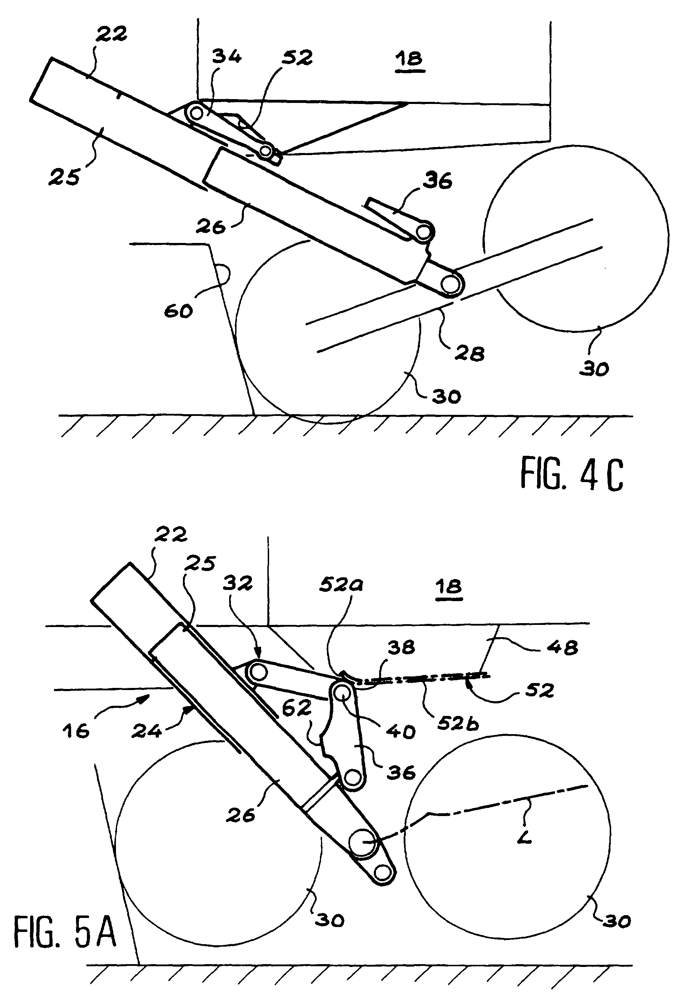

Dans ces conditions, le déplacement de l'avion qui se poursuit, combiné à l'action de la pression qui règne à l'intérieur de l'amortisseur 24, tendent à éjecter la partie basse du train d'atterrissage 16, c'est-à-dire l'ensemble constitué par le tube 26, le bras 36, le boggie 28, les roues 30 et les freins qui leur sont associés. Comme l'illustre la figure 4C, cette éjection s'effectue sans dommage pour le réservoir de carburant 18 lorsqu'il existe et, par conséquent, sans aucun risque pour l'intégrité de l'avion.

Les figures 5A à 5C illustrent un deuxième mode de réalisation de l'invention, lors de la survenance d'un basculement accidentel vers l'arrière du train d'atterrissage 16. Ce mode de réalisation se distingue principalement du précédent par la nature de la pièce du système d'embiellage 32 appelée à se rompre en cas d'accident, ainsi que par la forme de la glissière 52.

Ainsi, dans le cas des figures 5A à 5C, la rupture du système d'embiellage 32 se produit au niveau de l'axe 40, sous l'effet des efforts de cisaillement qui lui sont appliqués lorsque la valeur maximale prédéterminée de l'angle séparant les bras 34 et 36 est atteinte. Ces efforts sont appliqués, comme précédemment, grâce à un agencement tel qu'illustré sur la figure 3. Dans ce cas, l'axe 40 est dimensionné de façon à se rompre par cisaillement dans de telles conditions accidentelles, tout en étant apte à supporter les efforts que lui sont normalement appliqués dans les conditions d'atterrissage les plus sévères.

Le deuxième mode de réalisation de l'invention illustré sur les figures 5A à 5C se distingue également du précédent par la forme de la glissière 52 prévue sur l'élément de structure renforcé 48.

Ainsi, la glissière 52 comprend une première partie 52a, inclinée (ou non) vers l'arrière (ou vers l'avant) et vers le bas (ou vers le haut), sur laquelle l'articulation 38 du système d'embiellage 32 vient automatiquement en appui lors d'un basculement accidentel vers l'arrière du train d'atterrissage 16, comme l'illustre la figure 5A. L'amortisseur 24 est alors détendu et la butée 25 de fin de course détendue est rompue.

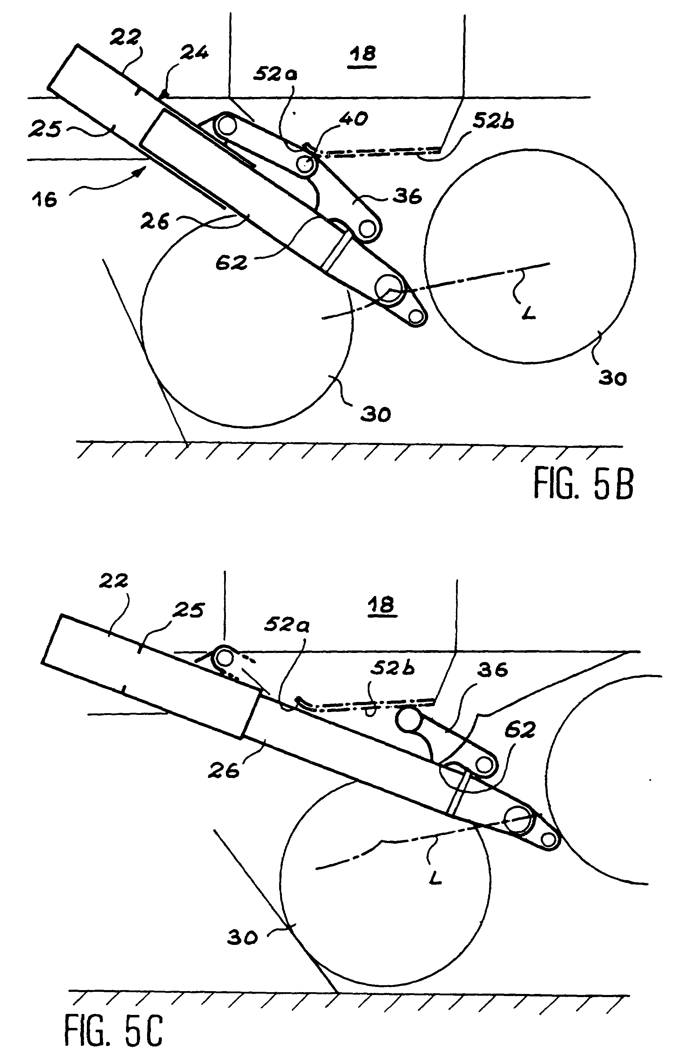

L'articulation 38 coulisse ensuite contre cette première partie 52a de la glissière, jusqu'à la rupture de l'axe 40 du système d'embiellage 32, dans une position qui apparaît sur la figure 5B.

Les effets cumulés de la poursuite du déplacement de l'avion et de la pression résiduelle régnant dans l'amortisseur 24 ont ensuite pour effet d'éjecter vers l'arrière la partie basse du train d'atterrissage 16, c'est-à-dire le tube 26, le bras 36, le boggie 28, les roues 30 et les freins qui leur sont associés. Lors de cette éjection, l'extrémité haute du bras 36, initialement intégrée à l'articulation 38, est guidée par une deuxième partie 52b, sensiblement horizontale, de la glissière, cette deuxième partie 52b prolongeant la partie 52a vers l'arrière, comme le montre la figure 5C.

Comme le montrent les figures 5A, 5B et 5C, le bras 36 est équipé d'un butoir 62, tourné vers le tube 26 de l'amortisseur. Ce butoir 62 maintient un écartement minimal entre le tube 26 et la glissière 52 (figures 5B et 5C), après la rupture de l'axe 40. Cela permet de tenir la partie détachée du train suffisamment éloignée du fuselage pour éviter tout choc.

Sur les figures 5A, 5B et 5C, une ligne L en trait mixte illustre le trajet suivi par l'articulation reliant le tube 26 au boggie du train, du fait du guidage du bras 36 par la glissière 52. Cette ligne montre clairement que tout risque de perforation du réservoir 18 par la partie éjectée du train 16 est bien évité.

Bien entendu, les modes de réalisation qui viennent d'être décrits peuvent subir différentes variantes, sans sortir du cadre de l'invention. Ainsi, la commande de la rupture de l'une des pièces du système d'embiellage 32 peut aussi être assurée par une butée intégrée dans l'une ou l'autre des articulations qui relient respectivement le bras 34 au fût 22 et le bras 36 au tube 26. En outre, les deux modes de rupture du système d'embiellage 32 peuvent être combinés avec différentes réalisations possibles de la glissière 52.

## Revendications

1. Avion, comprenant une structure (10) et au moins un train d'atterrissage (16) implanté sous la structure (10), le train d'atterrissage (16) comportant un châssis (20), un boggie (28), un amortisseur (24) doté d'une butée (25) de fin de course détendue et un système d'embiellage (32) placé derrière l'amortisseur (24), l'amortisseur (24) et le système d'embiellage (32) reliant séparément le boggie (28) au châssis (20), **caractérisé en ce que** la structure (10) comporte une glissière (52) contre laquelle peut venir en appui le système d'embiellage (32), lors d'un basculement accidentel du train d'atterrissage (16) vers l'arrière, pour provoquer successivement une détente complète de l'amortisseur (24), une rupture de la butée (25) de fin de course détendue et une rupture du système d'embiellage (32).

2. Avion selon la revendication 1, dans lequel le système d'embiellage (32) comprend deux bras (34,36) reliés bout à bout par une articulation (38) apte à venir en appui contre la glissière (52) lors dudit basculement accidentel du train d'atterrissage (16) vers l'arrière.

3. Avion selon la revendication 2, dans lequel l'articulation (38) comprend une butée (54) de commande de rupture, apte à commander la rupture d'une pièce (36,40) du système d'embiellage (32) lorsqu'un angle formé entre les deux bras (34,36) atteint une valeur maximale prédéterminée.

4. Avion selon la revendication 3, dans lequel ladite pièce est l'un (36) des bras (34,36) du système d'embiellage (32), ledit bras (36) comportant une zone dimensionnée de façon à pouvoir se rompre par flexion.

5. Avion selon la revendication 3, dans lequel ladite pièce est un axe (40) de l'articulation (38), dimensionné de façon à pouvoir se rompre par cisaillement.

6. Avion selon l'une quelconque des revendications 2 à 5, dans lequel l'un (36) des bras (34,36), articulé sur le boggie (28), comporte un butoir (62) apte à venir en appui contre l'amortisseur (24), après la rupture du système d'embiellage (32).

7. Avion selon l'une quelconque des revendications précédentes, dans lequel la glissière (52) est formée sur un élément de structure renforcé (48).

8. Avion selon l'une quelconque des revendications précédentes, dans lequel la glissière (52) comprend une première partie (52a), apte à commander successivement la rupture de la butée (25) de fin de course détendue de l'amortisseur (24) et la rupture du système d'embiellage(32), et une deuxième partie (52b), apte à guider une partie détachée du train d'atterrissage à l'écart dudit élément de structure (10) de l'avion.

9. Avion selon l'une quelconque des revendications précédentes, dans lequel un réservoir de carburant (18) est placé dans la structure (10) de l'avion, au-dessus de la glissière (52).

## Patentansprüche

1. Flugzeug mit einer Struktur (10) und mindestens einem Fahrwerk (16), das unter der Struktur (10) angeordnet ist, wobei das Fahrwerk (16) ein Chassis (20), ein Rollgestell bzw. Boggie (28), einen Stoßdämpfer (24), der mit einem Entspannungshub-Endanschlag (25) versehen ist, sowie ein Kurbeltriebsystem (32), das hinter dem Stoßdämpfer (24) angebracht ist, umfasst, wobei der Stoßdämpfer (24) und das Kurbeltriebsystem (32) separat das Rollgestell (28) mit dem Chassis (20) verbinden, **dadurch gekennzeichnet, dass** die Struktur (10) ein Gleitelement (52) umfasst, gegen das das Kurbeltriebsystem (32) bei einem zufälligen bzw. unvorhergesehenen Kippen des Fahrwerks (16) nach hinten anliegen kann, um nacheinander eine komplette Entspannung des Stoßdämpfers (24), ein Zerbrechen des Entspannungshub-Endanschlags (25) und ein Zerbrechen des Kurbeltriebsystems (32) auszulösen.

2. Flugzeug nach Anspruch 1, wobei das Kurbeltriebsystem (32) zwei Arme (34,36) umfasst, die durch ein Gelenk (38), welches gegen das Gleitelement (52) bei dem zufälligen bzw. unvorhergesehenen Kippen des Fahrwerks (16) nach hinten zur Anlage kommen kann, miteinander am Stoß verbunden sind.

3. Flugzeug nach Anspruch 2, wobei das Gelenk (38) einen Anschlag (54) zur Bruchsteuerung umfasst, der das Zerbrechen eines Teils (36,40) des Kurbeltriebsystems (32) steuern bzw. befehlen kann, wenn ein zwischen den beiden Armen (34,36) gebildeter Winkel einen vorbestimmten Maximalwert erreicht.

4. Flugzeug nach Anspruch 3, wobei das Teil einer (36) der Arme (34,36) des Kurbeltriebsystems (32) ist, wobei der Arm (36) eine Zone aufweist, die so dimensioniert ist, dass sie durch Biegen zerbrechen kann.

5. Flugzeug nach Anspruch 3, wobei das Teil eine Achse (40) des Gelenks (38) ist, die so dimensioniert ist, dass sie durch Abscheren zerbrechen kann.

6. Flugzeug nach einem der Ansprüche 2 bis 5, wobei einer (36) der Arme (34,36), der am Rollgestell (28) angelenkt ist, einen Anschlag (62) umfasst, der gegen den Stoßdämpfer (24) nach dem Zerbrechen des Kurbeltriebsystems (32) zur Anlage kommen kann.

7. Flugzeug nach einem der vorangehenden Ansprüche, wobei das Gleitelement (52) aus einem verstärkten Strukturelement (48) gebildet ist.

8. Flugzeug nach einem der vorangehenden Ansprüche, wobei das Gleitelement (52) einen ersten Abschnitt (52a) umfasst, der nacheinander das Zerbrechen des Entspannungshub-Endanschlags (25) des Stoßdämpfers (24) und das Zerbrechen des Kurbeltriebsystems (32) steuern kann, und einen zweiten Abschnitt (52b), der ein vom Fahrwerk losgelöstes Teil im Abstand zu dem Struktureelement (10) des Flugzeugs führen kann.

9. Flugzeug nach einem der vorangehenden Ansprüche, wobei ein Treibstoffreservoir (18) in der Struktur (10) des Flugzeugs oberhalb des Gleitelements (52) angeordnet ist.

## Claims

1. Aircraft, comprising a structure (10) and at least one landing gear (16) fitted under the structure (10), the landing gear (16) comprising a frame (20), a bogie (28), a damper (24) equipped with a slack limit stop (25) and a rod system (32) placed behind the damper (24), the damper (24) and the rod system (32) connecting the bogie (28) to the frame (20) separately, **characterized in that** the structure (10) comprises a sliding rail (52) with which the rod system (32) can come into contact, in the event of accidental tilting of the landing gear (16) to the rear, to induce successively a complete slackening of the damper (24), a rupture of the slack limit stop (25) and a rupture of the rod system (32).

2. Aircraft according to claim 1, wherein the rod system (32) comprises two arms (34, 36) connected end to end by a joint (38) capable of coming into contact with the sliding rail (52) in the event of said accidental tilting of the landing gear (16) to the rear.

3. Aircraft according to claim 2, wherein the joint (38) comprises a rupture control stop (54), capable of controlling the rupture of a part of the rod system (32) when an angle formed between the two arms (34, 36) reaches a predetermined maximum value.

4. Aircraft according to claim 3, wherein said part is one (36) of the arms (34, 36) of the rod system (32), said arm (36) comprising a zone dimensioned so as to enable rupture by bending.

5. Aircraft according to claim 3, wherein said part is a shaft (40) of the joint (38), dimensioned so as to enable rupture by shearing.

6. Aircraft according to any one of the claims 2 to 5, wherein one (36) of the arms (34, 36), articulated on the bogie (28), comprises a stop (62) capable of coming into contact with the damper (24), after the rupture of the rod system (32).

7. Aircraft according to any one of the preceding claims, wherein the sliding rail (52) is formed on a reinforced structural part (48).

8. Aircraft according to any one of the preceding claims, wherein the sliding rail (52) comprises a first part (52a), capable of controlling the rupture of the slack limit stop (25) of the damper (24) and the rupture of the rod system (32) successively, and a second part (52b), capable of guiding a detached part of the landing gear away from said structural part (10) of the aircraft.

9. Aircraft according to any one of the preceding claims, wherein a fuel tank (18) is placed in the structure (10) of the aircraft, above the sliding rail (52).
